# EUROPÄISCHE PATENTSCHRIFT

(11) **EP 2 493 656 B1**
(45) Veröffentlichungstag und Bekanntmachung des Hinweises auf die Patenterteilung: **14.10.2015**
(21) Anmeldenummer: 10751591.8
(22) Anmeldetag: 27.08.2010
(51) Int. Cl.: B23Q 11/00, B27G 19/02, B27B 5/22

(54) **ÜBERWACHUNGSVORRICHTUNG EINER WERKZEUGMASCHINE**
MONITORING DEVICE OF A MACHINE TOOL
DISPOSITIF DE SURVEILLANCE D'UNE MACHINE-OUTIL

(30) Priorität: 27.10.2009 DE 102009046040
(43) Veröffentlichungstag der Anmeldung: 05.09.2012
(73) Patentinhaber: Robert Bosch GmbH, 70442 Stuttgart (DE)
(72) Erfinder: STELLMANN, Georg, 71640 Ludwigsburg (DE); JACKISCH, Sebastian, 71638 Ludwigsburg (DE); DAMMERTZ, Ralph, Mt. Prospect IL 600562230 (US)
(86) Internationale Anmeldenummer: PCT/EP2010/062523
(87) Internationale Veröffentlichungsnummer: WO 2011/051014

(56) Entgegenhaltungen:
- WO-A1-2009/109250
- WO-A2-03/006213
- DE-A1-102007 032 221
- US-A1- 2005 155 473

## Beschreibung

### Stand der Technik

Die Erfindung geht aus von einer Überwachungsvornchtung einer Werkzeugmaschine nach dem Oberbegriff des Anspruchs 1.

In der Druckschrift DE 10 2007 032 221 A1 ist bereits eine Werkzeugmaschine mit einer Sicherheitseinheit vorgeschlagen worden, die eine Sensoreinheit und eine Aktorikelnheit umfasst. Die Aktorikeinheit ist zum Auslösen eines Sicherheitsvorgangs in Abhängigkeit einer durch die Sensoreinheit erfassten Kenngröße vorgesehen. Die Werkzeugmaschine weist eine Kallbriereinheit zum Kalibrieren der Sicherheitseinheit auf, um Fehlauslösungen der Aktorikeinheit aufgrund einer geänderten Arbeitsumgebung zu vermelden.

Die WO 2003/006213 A2 offenbart ein Sicherheitssystem für Elektrowerkzeuge, wie beispielsweise Kreissägen. Das Sicherheitssystem der WO 2003/006213 A2 besitzt einen Sicherheitssensor, der den Kontakt eines Anwenders der Werkzeugmaschine wie beispielsweise den Kontakt einer Hand oder eines Fingers des Anwenders mit der Werkzeugmaschine, insbesondere dem Sägeblatt der Werkzeugmaschine, detektiert und das Gerät instantan stoppt. Dazu misst das System der WO 2003/006213 A2 den von einem Benutzer der Maschine über das Sägeblatt auf die Maschine übertragenen Verschiebestrom. Da dieses Kontaktsignal und damit auch das Auslösesignal zum Stoppen der Werkzeugmaschine von variablen Betriebsparametern, wie beispielsweise parasitären Kapazitäten der Maschine abhängig ist, sind in der Maschinensteuerung der Werkzeugmaschine der WO 2003/006213 A2 verschiedene Kennlinien abgelegt, die für die unterschiedliche Betriebsparameter eine angepasste Auslöseschwelle ermöglichen und somit - in gewissen Grenzen - eine variable Auslösung des Sicherheitssystems gewährleisten. Da die parasitären Kapazitäten der Werkzeugmaschine nicht leicht zu bestimmen und als Kennlinie abzulegen sind, schlägt die WO 2003/006213 A2 auch vor, die Auslöseschwellen nicht als Funktion der parasitären Kapazitäten direkt, sondern als Funktion von mit diesen Kapazitäten korrelierten Größen des ersten Sensors, festzulegen. So schlägt die WO 2003/006213 A2 beispielsweise vor, die Arbeitsspannung des Kontaktsensors, die von den parasitären Kapazitäten der Maschine abhängig ist, zu verwenden, um die Auslöseschwelle entsprechend anzupassen

Die Erfindung ist im Anspruch 1 definiert.

Unter einer "Sicherheitseinheit" soll in diesem Zusammenhang insbesondere eine Einheit verstanden werden, die dazu vorgesehen ist, abhängig von einem Signal des zumindest einen Sensors in Situationen, die eine potentielle Gefährdung eines Bedieners der Werkzeugmaschine darstellen, ein Signal auszugeben und/oder insbesondere in einen Betrieb der Werkzeugmaschine einzugreifen. Unter einer "charakterisierenden physikalischen Messgröße" soll in diesem Zusammenhang insbesondere eine quantitative Beschreibung einer spezifischen physikalischen Eigenschaft des Werkstücks verstanden werden, insbesondere eine elektrische Permittivität oder eine elektrische Leitfähigkeit. Unter "während einer Bearbeitung des Werkstücks" soll in diesem Zusammenhang insbesondere verstanden werden, dass Umwandlungen der charakterisierenden physikalischen Messgröße eines Teils des Werkstücks in elektrische Kenngrößen durch den Referenzsensor im Wesentlichen fortwährend und insbesondere ab einer Inbetriebnahme der Werkzeugmaschine erfolgen, mit einem zeitlichen Abstand aufeinander folgender Messungen von weniger als zehn Sekunden, bevorzugt mit einem zeitlichen Abstand von weniger als einer Sekunde und besonders bevorzugt mit einem zeitlichen Abstand von weniger als 0,2 Sekunden. Unter einem "Referenzwert für ein Signal des ersten Sensors" soll in diesem Zusammenhang insbesondere ein Wert verstanden werden, der dazu vorgesehen ist, während einer Auswertung des Signals des ersten Sensors in zumindest einem Betriebszustand als Bezugsgröße zu dienen. Dadurch kann im laufenden Betrieb der Werkzeugmaschine auf einfache Weise eine Beeinflussung des ersten Sensors der Sicherheitseinheit durch das Werkstück im Wesentlichen kompensiert werden, so dass eine Funktion der Sicherheitseinheit mit einer gleich bleibenden Zuverlässigkeit, auch bei variierenden physikalischen Eigenschaften des Werkstücks, die ein Signal des ersten Sensors beeinflussen, bereitgestellt werden kann.

Wenn der Referenzsensor dazu vorgesehen ist, eine physikalische Messgröße in einem Signal zu erfassen, die im Wesentlichen von einem Feuchtegehalt des Werkstücks bestimmt ist, kann vorteilhaft eine Beeinflussung des ersten Sensors durch einen variierenden Feuchtegehalt des Werkstücks kompensiert werden, so dass eine gleich bleibende Zuverlässigkeit der Funktion der Sicherheitseinheit ermöglicht werden kann. Vorzugsweise können als physikalische Messgröße, die im Wesentlichen von dem Feuchtegehalt des Werkstücks bestimmt wird, eine elektrische Leitfähigkeit oder eine elektrische Permittivität genutzt werden.

In einer vorteilhaften Ausgestaltung weist die Überwachungsvorrichtung eine Lagereinheit auf, die dazu dient, den Referenzsensor in einem Bereich zu lagern, der, bezüglich einer vorgegebenen Vorschubrichtung, in welcher das Werkstück während der Bearbeitung gegen ein Werkzeug der Werkzeugmaschine bewegt wird, vor dem Werkzeug angeordnet ist. Durch diese Anordnung können eine Auswertung des Referenzwerts und ein entsprechender, den ersten Sensor betreffender Anpassungsvorgang, und zwar insbesondere eine Kompensation einer Beeinflussung des ersten Sensors durch das Werkstück, effektiv in einer Bearbeitungsphase erfolgen, in welcher sich eine Körperpartie eines Bedieners dem Werkzeug nähert, wobei die Sicherheit des Bedieners vorteilhaft erhöht werden kann. Unter einem Bereich, der "vor" dem Werkzeug angeordnet ist, soll insbesondere ein Teilbereich einer zum Auflegen und Führen des Werkstücks vorgesehenen Arbeitsfläche der Werkzeugmaschine verstanden werden, der zum Führen des zur Bearbeitung durch das Werkzeug bestimmten Teils des Werkstücks dient, und/oder ein Bereich der Werkzeugmaschine verstanden werden, der eine senkrecht zur Arbeitsfläche ausgeführte Projektion in diesem Teilbereich der Arbeitsfläche aufweist. Vorzugsweise ist dieser Teilbereich der Arbeitsfläche unmittelbar vor dem Werkzeug angeordnet. Ist das Werkzeug als Säge ausgebildet, ist dieser Teilbereich der Arbeitsfläche vorteilhaft durch eine Schnittebene durchquert, welche der imaginären Fortsetzung des Sägeblatts entgegen der Vorschubrichtung entspricht und eine so genannte Sägelinie in der Arbeitsfläche definiert.

Ferner wird vorgeschlagen, dass der Referenzsensor als UWB-Sensoreinheit ausgebildet ist. Unter einer "UWB-Sensoreinheit" (UWB = ultra wide band, Ultra-Breitband) soll in diesem Zusammenhang insbesondere eine Sensoreinheit verstanden werden, die dazu vorgesehen ist, elektromagnetische Signale mit einer Mittelfrequenz zwischen 30 MHz und 15 GHz und einer Bandbreite von mindestens 500 MHz, typischerweise von einigen GHz, auszusenden und/oder zu empfangen. Durch eine Ausgestaltung des Referenzsensors als UWB-Sensoreinheit kann vorteilhaft ein besonders hoher Informationsgehalt in Bezug auf die charakterisierende physikalische Messgröße des Werkstücks erhalten werden. Vorzugsweise beträgt eine spektrale Leistungsdichte der UWB-Sensoreinheit maximal -41,3 dBm/Hz EIRP (Equivalent Isotropic Radiated Power), so dass Interferenzen mit anderen Geräten, die mit Frequenzen zwischen 30 MHz und 15 GHz betrieben werden, vorteilhaft vermieden werden können.

In diesem Zusammenhang wird vorgeschlagen, dass die UWB-Sensoreinheit dazu vorgesehen ist, bei einer Mittelfrequenz betrieben zu werden, die in einem vorgegebenen Frequenzbereich auf diskrete Weise variiert. Im Gegensatz zu einer breitbandigen Anregung des Frequenzbereichs wird hierbei vorzugsweise in der Form einer pulsartigen Anregung der UWB-Sensoreinheit diese diskret angeregt, wobei die Mittelfrequenz sukzessiv verschiedene, diskrete Werte im vorgegebenen Frequenzbereich annimmt. Vorzugsweise nehmen Frequenzabstände zwischen zwei sukzessiven Anregungsfrequenzen unterschiedliche Werte an, um Vorschriften von Regulierungsbehörden auf besonders effektive Weise Rechnung zu tragen. Unter einer "Mittelfrequenz" der UWB-Sensoreinheit soll in diesem Zusammenhang insbesondere eine Frequenz verstanden werden, die ein arithmetisches Mittel zweier Frequenzen darstellt, bei denen eine spektrale Leistungsdichte relativ zu einer maximalen spektralen Leistungsdichte des UWB-Sensorsystems um 10 dB abgesunken ist. Durch eine Variation der Mittelfrequenz der UWB-Sensoreinheit kann der Informationsgehalt in Bezug auf die charakterisierende physikalische Größe des Werkstücks durch Messungen in unterschiedlichen Frequenzbereichen gesteigert werden.

In einer vorteilhaften Ausgestaltung ist die UWB-Sensoreinheit dazu vorgesehen, bei einer Mittelfrequenz betrieben zu werden, die periodisch in einem vorgegebenen Frequenzbereich variiert. Hierbei kann der Frequenzbereich durch eine kontinuierliche Variation der Mittelfrequenz abgetastet werden. Jedoch ist von Vorteil, wenn die UWB-Sensoreinheit in einer Anregungssequenz ausgehend von einer Untergrenze des Frequenzbereichs mit diskreten Werten der Mittelfrequenz angeregt wird, wobei die Mittelfrequenz schrittweise erhöht wird, bis eine Obergrenze des Frequenzbereichs erreicht ist, und sich diese Anregungssequenz periodisch wiederholt.

Wenn die Überwachungsvorrichtung zumindest einen dritten, als UWB-Sensoreinheit ausgebildeten Sensor umfasst, der dazu vorgesehen ist, bei einer Mittelfrequenz betrieben zu werden, die einen Abstand von mindestens 500 MHz zu einer Mittelfrequenz des Referenzsensors aufweist, kann eine Steigerung des Informationsgehalts in Bezug auf die charakterisierende physikalische Größe des Werkstücks durch Messung in unterschiedlichen Frequenzbereichen auf besonders einfache Weise erzielt werden.

Zudem wird vorgeschlagen, dass von dem als UWB-Sensoreinheit ausgebildeten Referenzsensor und dem als UWB-Sensoreinheit ausgebildeten Sensor zumindest ein Sensor, und besonders vorteilhaft genau ein Sensor, eine koplanare Antenne aufweist. Unter einer "koplanaren Antenne" soll in diesem Zusammenhang insbesondere eine Antenne verstanden werden, die von an sich bekannten Streifenleiter-Elementen gebildet ist, die in einer Ebene auf einem dielektrischen Träger angeordnet sind. Vorzugsweise kann die koplanare Antenne als Patch-Antenne oder Spiralantenne ausgebildet sein. Grundsätzlich ist aber auch eine Verwendung anderer, dem Fachmann sinnvoll erscheinender Bauformen denkbar. Durch die Ausstattung eines der als UWB-Sensoreinheit ausgebildeten Sensoren mit einer koplanaren Antenne kann vorteilhaft eine Konzentration eines Empfindlichkeitsbereichs des einen Sensors auf eine Oberfläche des Werkstücks erreicht werden. Durch eine Ausstattung des anderen der als UWB-Sensoreinheit ausgebildeten Sensoren mit einem von einer koplanaren Bauform abweichenden Antenne, beispielsweise einer Freiraumantenne, kann eine Mittelung der charakterisierenden physikalischen Größe über einen ausgedehnten Volumenbereich des Werkstücks erreicht werden. Vorteilhaft kann durch eine Kombination der Signale der beiden Sensoren ein die mechanischen Eigenschaften des Werkstücks nur unwesentlich beeinflussender, oberflächlicher Feuchtigkeitsfilm von einer die mechanischen Eigenschaften des Werkstücks stark beeinflussenden erhöhten Feuchte im Inneren des Werkstücks unterschieden werden.

Ferner wird vorgeschlagen, dass die Überwachungsvorrichtung eine Lagereinheit aufweist, mittels welcher der Referenzsensor tiefer als eine zum Auflegen des Werkstücks vorgesehene Arbeitsfläche der Werkzeugmaschine gelagert ist. Hierbei bezieht sich der Begriff "tiefer" auf eine Richtung, die senkrecht zur Arbeitsfläche ausgerichtet ist. In einer Ausführung der Werkzeugmaschine als stationäre Maschine kann diese Richtung der vertikalen Richtung entsprechen. Durch eine derartige Anordnung des Referenzsensors kann eine für einen effektiven Betrieb des Referenzsensors unvorteilhafte Nähe eines Werkstückmaterials, insbesondere ein direkter Kontakt zwischen dem Referenzsensor und dem Werkstückmaterial, vermieden werden.

Durch die Lagereinheit ist der Referenzsensor durch einen Abstand in einer Richtung senkrecht zur Arbeitsfläche von der Arbeitsfläche beanstandet. Ein besonders effektiver Erfassungsvorgang durch den Referenzsensor kann ferner erfolgen, wenn der Referenzsensor mittels der Lagereinheit durch einen Luftabstand von der Arbeitsfläche beabstandet ist. In diesem frei von Material ausgestalteten Raum können besonders effizient elektromagnetische Wellen ausgebildet und ausgebreitet werden. Vorzugsweise wird hierzu ein Hohlraum aus einem die Arbeitsfläche bildenden Material ausgespart. Um eine lückenlose Arbeitsfläche für den Bediener zur Verfügung zu stellen, kann ferner in der Arbeitsfläche ein Deckmittel vorgesehen sein, welches diesen Hohlraum von oben bedeckt und als Teilbereich der Arbeitsfläche dient.

Des Weiteren wird vorgeschlagen, dass der erste Sensor als kapazitiver Sensor ausgebildet ist und der Referenzsensor eine Information bereitstellt, die ein Maß für eine physikalische Kenngröße des Werkstücks darstellt und die dazu vorgesehen ist, zur Festlegung eines Referenzwerts für das Signal des ersten Sensors zu dienen. Besonders vorteilhaft kann die physikalische Kenngröße als elektrische Permittivität ausgeführt sein. Unter einem "kapazitiven Sensor" soll in diesem Zusammenhang insbesondere ein Sensor verstanden werden, dessen Signalhöhe von einem Kapazitätswert eines Kondensators, einer Kondensatoranordnung oder eines Systems von Kondensatoren abhängig ist. Unter einem "Referenzwert für das Signal des ersten Sensors" soll in diesem Zusammenhang insbesondere ein Wert verstanden werden, der dazu vorgesehen ist, während einer Auswertung des Signals des kapazitiven Sensors in zumindest einem Betriebszustand als Bezugsgröße zu dienen. Dadurch kann auf einfache und effektive Weise eine Grundlage der Auswertung des Signals des kapazitiven Sensors bereitgestellt werden, die Änderungen des Kapazitätswerts durch das Werkstück kompensiert, so dass der kapazitive Sensor mit gleich bleibender Zuverlässigkeit Änderungen des Kapazitätswerts erfassen kann, die durch einen Bediener verursacht werden. Vorzugsweise ist der kapazitive Sensor als berührungslos arbeitender Näherungssensor ausgeführt. Grundsätzlich kann er aber auch so ausgestaltet sein, dass eine Signaländerung im Wesentlichen durch eine Berührung durch den Bediener ausgelöst wird. Aufgrund der vergleichsweise hohen elektrischen Permittivität von Wasser im Frequenzbereich zwischen 30 MHz und 15 GHz kann insbesondere eine Beeinflussung des kapazitiven Sensors der Sicherheitseinheit durch einen variierenden Feuchtegehalt des Werkstücks vorteilhaft vermieden werden.

Ferner wird vorgeschlagen, dass die Überwachungsvorrichtung eine Auswerteeinheit umfasst, die dazu vorgesehen ist, aus einem Signal des Referenzsensors ein Maß für eine physikalische Kenngröße des Werkstücks zu ermitteln und dieses Maß als Signal bereitzustellen. Vorteilhaft kann dadurch eine Information über Materialeigenschaften des Werkstücks wie den Feuchtegehalt und insbesondere über im Werkstück enthaltene und von außen unsichtbare Materialien bereitgestellt werden. Besonders vorteilhaft kann die physikalische Kenngröße als elektrische Permittivität ausgeführt sein. Vorteilhaft können im Werkstück enthaltene metallene Einschlüsse oder solche, deren spezifische elektrische Leitfähigkeit in zumindest einer Raumrichtung mehr als 5 x 10⁵ S/m beträgt, detektiert werden, so dass für die Werkzeugmaschine oder deren Teile ein potentiell erhöhter Verschleiß und/oder für den Bediener eine potentielle Gefährdung vermieden werden kann. Mit Vorteil hinsichtlich einer Materialersparnis kann die Auswerteeinheit einstückig mit der Sicherheitseinheit ausgebildet sein.

Vorteilhaft ist die Überwachungsvorrichtung mit einer Anzeigeeinheit ausgestattet, die dazu vorgesehen ist, eine von der Auswerteeinheit aufgrund eines Signals des Referenzsensors erzeugte Kenngröße anzuzeigen, um einen Bediener über eine Höhe der charakterisierenden physikalischen Messgröße des Werkstücks durch eine optische und/oder akustische Darstellung zu informieren.

In einer vorteilhaften Ausgestaltung ist die Auswerteeinheit dazu vorgesehen, bei Überschreitung eines im Voraus festgelegten Werts der physikalischen Kenngröße, beispielsweise der elektrischen Permittivität, ein spezifisches Signal bereitzustellen. Dadurch kann vorteilhaft ein Mittel zur Überwachung einer Sicherheit eines Bearbeitungsvorgangs und zur Vermeidung von erhöhtem Verschleiß von Teilen der Werkzeugmaschine und/oder einer Gefahr für den Bediener bereitgestellt werden.

Wenn die Sicherheitseinheit dazu vorgesehen ist, bei Überschreitung eines im Voraus festgelegten Werts der elektrischen Kenngröße des Referenzsensors eine bedienerseitige Quittierung zur Fortführung eines Betriebs der Werkzeugmaschine anzufordem, kann eine Bearbeitung eines Werkstücks, die potentiell ein Risiko hinsichtlich der Sicherheit des Bedieners und/oder des erhöhten Verschleißes von Teilen der Werkzeugmaschine birgt, vorteilhaft von einer Überprüfung abhängig gemacht und eine unkontrollierte Bearbeitung vermieden werden.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer als Tischkreissäge ausgebildeten Werkzeugmaschine mit einer Überwachungsvorrichtung,
- Fig. 2: eine weitere Ausführung einer als Tischkreissäge ausgebildeten Werkzeugmaschine mit einer Überwachungsvorrichtung,
- Fig. 3: eine Detailansicht einer Arbeitsfläche der Werkzeugmaschine mit einer einen Referenzsensor aufweisenden Sensoreinheit der Überwachungsvorrichtung,
- Fig. 4: die Anordnung aus Figur 4 in einer Draufsicht von oben und
- Fig. 5: eine schematische Darstellung der Anregung des als UWB-Sensor ausgebildeten Referenzsensors.

### Beschreibung der Ausführungsbeispiele

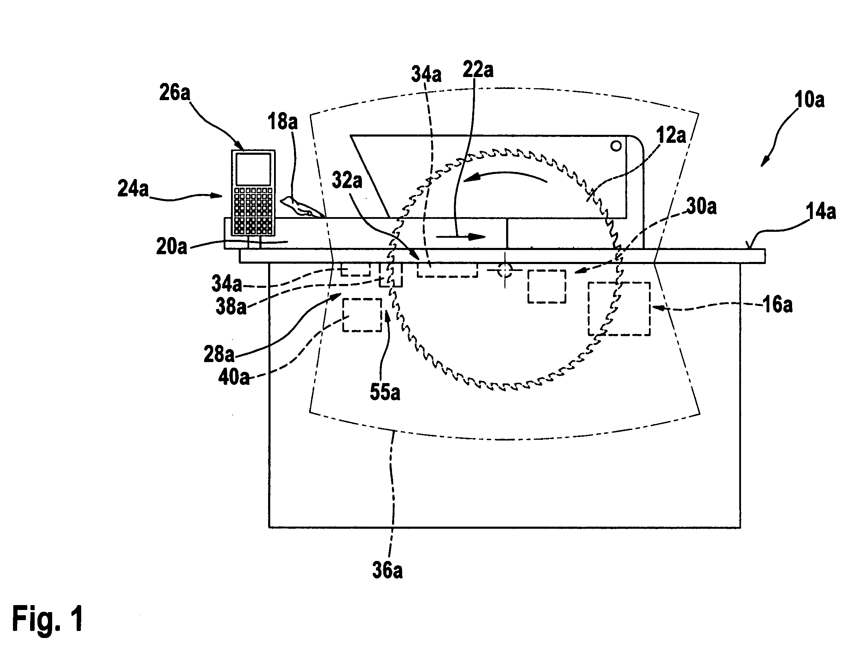

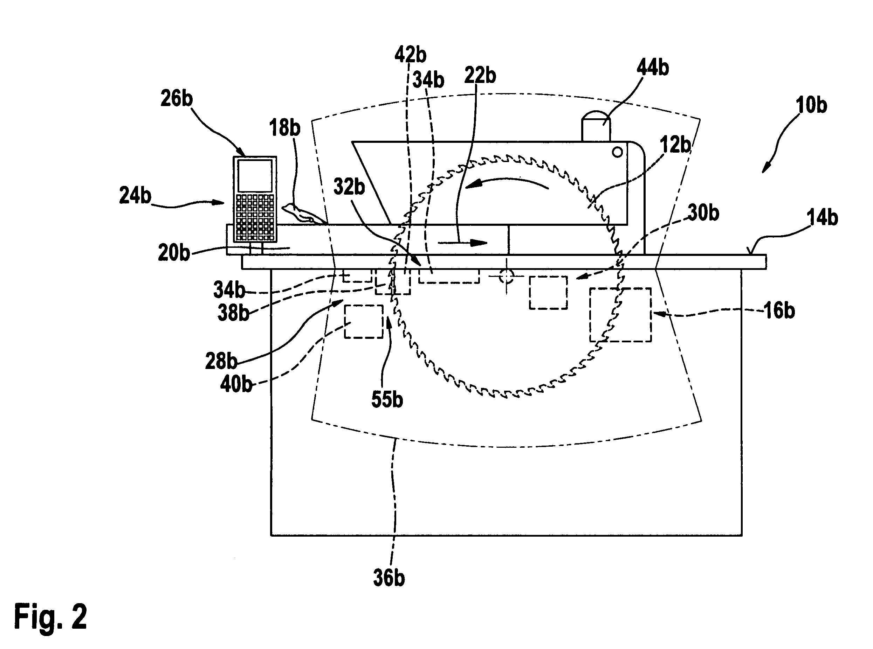

In den Figuren 1 und 2 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele die Buchstaben a und b hinzugefügt, wobei bezüglich gleich bleibender Bauteile, Merkmale und Funktionen auf die Beschreibung des Ausführungsbeispiels in der Figur 1 verwiesen werden kann.

In der Fig. 1 ist eine von einer Tischkreissäge gebildete Werkzeugmaschine 10a dargestellt. Die Werkzeugmaschine 10a weist ein Werkzeug 12a auf, das durch ein Kreissägenblatt gebildet ist und im montierten Zustand aus einer Ausnehmung in einer Arbeitsfläche 14a der Werkzeugmaschine 10a teilweise nach oben herausragt. Die Werkzeugmaschine 10a umfasst eine Motoreinheit 16a, die dazu vorgesehen ist, während eines Betriebs ein Antriebsmoment zum Antrieb des Werkzeugs 12a zu erzeugen. Während des Betriebs der Werkzeugmaschine 10a erteilt ein Bediener 18a in bekannter Weise einem als Holzbalken ausgebildeten Werkstück 20a einen mechanischen Vorschub entlang der Arbeitsfläche 14a in einer Vorschubrichtung 22a, die auf das Werkzeug 12a gerichtet ist. Ferner weist die Werkzeugmaschine 10a eine Eingabeeinheit 24a zur Eingabe von Betriebsparametern und eine Anzeigeeinheit 26a zu Kontrollzwecken auf. Die Werkzeugmaschine 10a umfasst weiterhin eine Sicherheitseinheit 30a mit einem als kapazitiven Sensor 32a ausgebildeten ersten Sensor, der aus mehreren Kapazitätselementen 34a besteht, die in einer Nähe des Werkzeugs 12a angeordnet sind und einen Schutzbereich 36a festlegen, der dem Werkzeug 12a der Werkzeugmaschine 10a zugeordnet ist. Dringt ein Bediener 18a der Werkzeugmaschine 10a während des Betriebs mit einem Körperteil in den Schutzbereich 36a ein, steigt eine Signalhöhe des kapazitiven Sensors 32a an. Die Sicherheitseinheit 30a ist dazu vorgesehen, im Fall einer Überschreitung eines im Voraus festgelegten und in der Sicherheitseinheit 30a hinterlegten Schwellenwerts des kapazitiven Sensors 32a ein Signal zu erzeugen, das in bekannter Weise auf die Motoreinheit 16a einwirkt und das Antriebsmoment des Werkzeugs 12a zum Schutz des Bedieners 18a abschaltet.

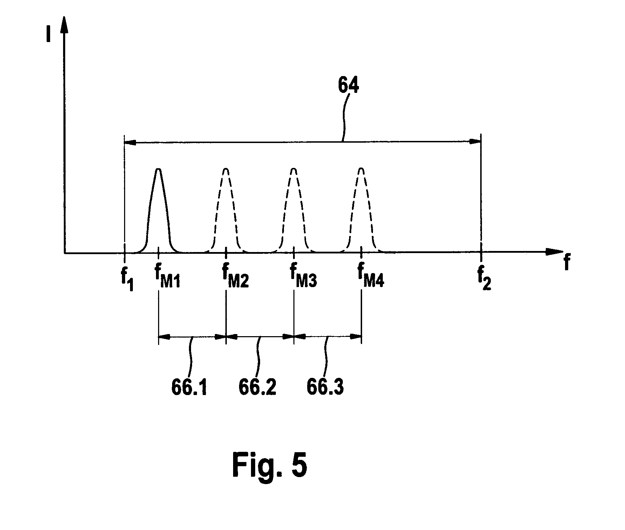

Weiterhin umfasst die Werkzeugmaschine 10a eine Überwachungsvorrichtung 28a mit einem Referenzsensor 38a, der als UWB-Sensoreinheit ausgebildet und innerhalb des dem Werkzeug 12a zugeordneten Schutzbereichs 36a angeordnet ist. Die Anregung der UWB-Sensoreinheit ist anhand der Figur 5 näher beschrieben.

Die Überwachungsvorrichtung 28a ist dazu vorgesehen, gleichzeitig mit einem Einschalten der Werkzeugmaschine 10a und der Sicherheitseinheit 30a mit dem kapazitiven Sensor 32a den Referenzsensor 38a in Betrieb zu nehmen. Der Referenzsensor 38a ist dazu vorgesehen, während einer Bearbeitung eines Werkstücks 20a mit der Werkzeugmaschine 10a eine charakterisierende physikalische Messgröße des Werkstücks 20a in eine elektrische Kenngröße umzuwandeln, die dazu vorgesehen ist, einen Referenzwert für ein Signal des kapazitiven Sensors 32a festzulegen. Der Referenzsensor 38a stellt dazu eine Information bereit, die ein Maß für eine elektrische Permittivität des Werkstücks 20a darstellt, und erfasst damit eine physikalische Messgröße in seinem Signal, die im Wesentlichen von einem Feuchtegehalt des Werkstücks 20a bestimmt ist. Die von dem Referenzsensor 38a bereitgestellte Information ist dazu vorgesehen, zur Festlegung eines Referenzwerts für das Signal des kapazitiven Sensors 32a zu dienen. In der in der Fig. 1 gezeigten Position des Werkstücks 20a befindet sich ein vom Werkzeug 12a bearbeiteter Teil des Holzbalkens gleichzeitig oberhalb des Referenzsensors 38a und in dem dem Werkzeug 12a zugeordneten Schutzbereich 36a, der von dem kapazitiven Sensor 32a erfasst wird, so dass der Feuchtegehalt des Holzbalkens das Signal des kapazitiven Sensors 32a sowie des Referenzsensors 38a beeinflusst. Die Überwachungsvorrichtung 28a umfasst ferner eine Auswerteeinheit 40a, die dazu vorgesehen ist, mit einer Messfrequenz von 20 Hz aus einem Signal des Referenzsensors 38a ein Maß für eine elektrische Permittivität des Werkstücks 20a zu ermitteln und der Anzeigeeinheit 26a dieses Maß als Signal bereitzustellen. Die Anzeigeeinheit 26a ist dazu vorgesehen, eine von der Auswerteeinheit 40a aufgrund eines Signals des Referenzsensors 38a erzeugte Kenngröße anzuzeigen, um einen Bediener 18a über eine Höhe der charakterisierenden physikalischen Messgröße des Werkstücks 20a durch eine optische und akustische Darstellung zu informieren. Die Auswerteeinheit 40a ist ferner dazu vorgesehen, bei einer Auswertung des Signals des kapazitiven Sensors 32a das Signal des Referenzsensors 38a als Korrektur zu berücksichtigen. Auf diese Weise wird eine in der Fig.1 gezeigte Betriebssituation trotz des in Bearbeitung befindlichen Werkstücks 20a mit seinem Feuchtegehalt für den kapazitiven Sensor 32a der Sicherheitseinheit 30a zu einer Ausgangssituation einer Beurteilung einer potentiellen Gefährdung eines Bedieners 18a der Werkzeugmaschine 10a. Sollte sich der Feuchtegehalt des Werkstücks 20a mit einer Bearbeitungslänge ändern, dann sorgt die Messfrequenz von 20 Hz, mit der die Auswerteeinheit 40a das Signal des Referenzsensors 38a auswertet, für eine ausreichend schnelle Anpassung des Signals des kapazitiven Sensors 32a.

Die Fig. 2 zeigt gleichfalls eine von einer Tischkreissäge gebildete Werkzeugmaschine, die sich von der gemäß der Fig. 1 nur in einigen Ausstattungsmerkmalen unterscheidet, die im Folgenden vollständig beschrieben werden.

Eine Überwachungsvorrichtung 28b gemäß der Fig. 2 umfasst einen dritten, als UWB-Sensoreinheit ausgebildeten Sensor 42b, der innerhalb eines Schutzbereichs 36b angeordnet ist, der einem von einem Kreissägenblatt gebildeten Werkzeug 12b zugeordnet ist. Der dritte Sensor 42b ist dazu vorgesehen, bei einer Mittelfrequenz von 10 GHz betrieben zu werden. Ein als UWB-Sensoreinheit ausgebildeter Referenzsensor 38b ist dazu vorgesehen, bei einer Mittelfrequenz von 10 GHz betrieben zu werden, so dass die Mittelfrequenz des dritten Sensors 42b einen Abstand von 2 GHz zur Mittelfrequenz des Referenzsensors 38b aufweist. Eine Auswerteeinheit 40b der Überwachungsvorrichtung 28b ist dazu vorgesehen, ein Signal des dritten Sensors 42b zu einer Erhöhung einer Genauigkeit eines Signals des Referenzsensors 38b zu verwenden.

Ferner ist die Auswerteeinheit 40b dazu vorgesehen, bei einer Überschreitung eines im Voraus festgelegten und in der Auswerteeinheit 40b hinterlegten Werts der elektrischen Permittivität ein spezifisches Signal bereitzustellen, das von einem Signalton und einer Blinkleuchte 44b gebildet ist. Damit kann die Überwachungsvorrichtung 28b einen Bediener 18b vor in einem als Holzbalken ausgebildeten Werkstück 20b verborgenen Einschlüssen aus Eisen warnen, die so groß sind, dass für ein von einem Kreissägenblatt gebildetes Werkzeug 12b eine Gefahr eines erhöhten Verschleißes besteht.

Weiterhin ist eine Sicherheitseinheit 30b dazu vorgesehen, bei Überschreitung eines im Voraus festgelegten Werts der elektrischen Kenngröße des Referenzsensors 38b eine bedienerseitige Quittierung zur Fortführung eines Betriebs einer Werkzeugmaschine 10b anzufordern. Der im Voraus festgelegte Wert ist auf eine routinemäßig in einem Betrieb der Werkzeugmaschine 10b vorkommende Situation ausgerichtet, in der mit der Werkzeugmaschine 10b ein als Verbundwerkstoff mit eingelegten, elektrisch leitfähigen Karbonfasern ausgebildetes Werkstück 20b zugesägt werden soll, was eine Verwendung eines besonderen Kreissägenblatts erfordert, da ein standardmäßiges Kreissägenblatt in dieser Situation einem zu großen Verschleiß unterworfen wäre. Die von der Sicherheitseinheit 30b angeforderte Quittierung zur Fortführung des Betriebs der Werkzeugmaschine 10b schafft eine Überprüfungssituation und vermeidet eine unkontrollierte Bearbeitung des Werkstücks 20b.

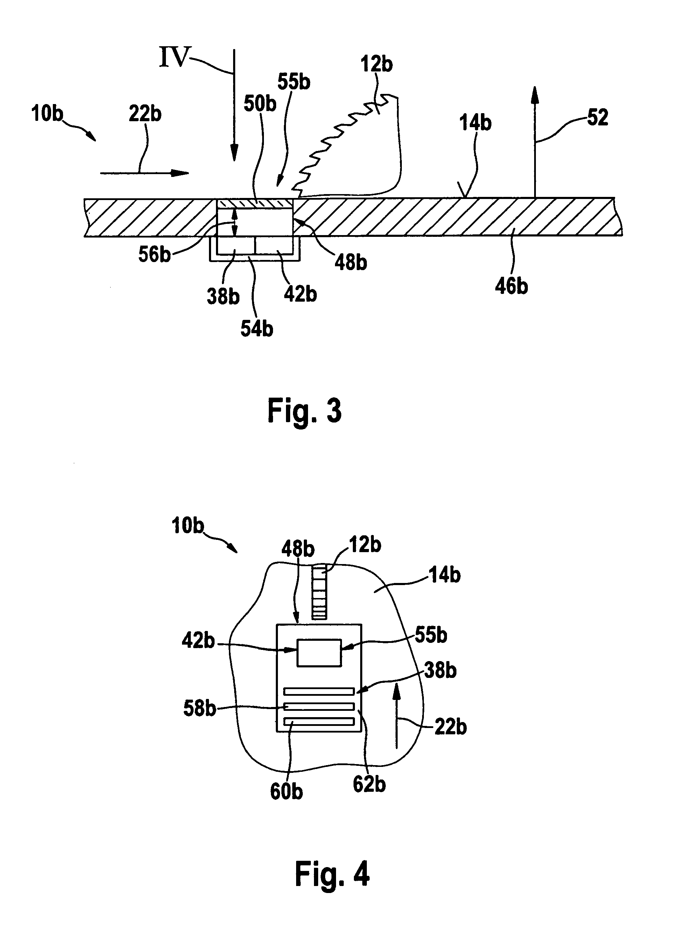

Figur 3 zeigt eine Detailansicht der Werkzeugmaschine 10b aus Figur 2. Die folgende Beschreibung, die zwar auf das Ausführungsbeispiel dieser Figur 2 mit einem dritten Sensor 42b bezogen ist, kann ebenfalls auf das Ausführungsbeispiel der Figur 1 entsprechende Anwendung finden, wobei in dieser Ausführung die Überwachungsvorrichtung keinen dritten Sensor 42b aufweist. Ein die Arbeitsfläche 14b bildendes Material 46b ist in einer Schnittdarstellung gezeigt. Aus diesem Material 46b ist ein Hohlraum 48b ausgespart, welcher zumindest dem Referenzsensor 38b zugeordnet ist. Durch diese Aussparung wird in der Oberfläche des Materials 46b eine Unterbrechung realisiert, in welcher ein Kunststofffenster 50b als Deckteil zum Bedecken des Hohlraums 48b und zur Bildung eines Teils der Arbeitsfläche 14b angeordnet ist. An diesen Hohlraum 48b schließen sich der Referenzsensor 38b und der dritte Sensor 42b an, die somit relativ zur Vertikalrichtung 52 senkrecht zur Arbeitsfläche 14b tiefer als die Arbeitsfläche 14b angeordnet sind. Eine Lagereinheit 54b lagert den Referenzsensor 38b und den dritten Sensor 42b in dieser Position unterhalb der Arbeitsfläche 14b, und zwar unterhalb des Hohlraums 48b oder, in einer nicht gezeigten alternativen Ausführung, im Hohlraum 48b. Die Lagereinheit 54b lagert den Referenzsensor 38b bzw. den dritten Sensor 42b in einem Bereich 55b der Werkzeugmaschine 10b, der bezüglich der Vorschubrichtung 22b vor dem Werkzeug 12b angeordnet ist. Insbesondere ist die Vertikalprojektion des Referenzsensors 38b bzw. des dritten Sensors 42b auf die Arbeitsfläche 14b in einem Teilbereich der Arbeitsfläche 14b angeordnet, der sich untermittelbar vor einer Arbeitskante des Werkzeugs 12b befindet. Dies kann insbesondere der Ansicht aus Figur 4 entnommen werden.

Durch die Lagereinheit 54b ist ferner ein Abstand zwischen dem Referenzsensor 38b bzw. dem dritten Sensor 42b und der Arbeitsfläche 14b in Vertikalrichtung 52 geschaffen, wodurch eine unvorteilhafte Nähe des Referenzsensors 38b bzw. des dritten Sensors 42b zum zu bearbeitenden Werkstück 32b (siehe Figur 1), und insbesondere ein direkter Kontakt zum Material des Werkstücks 32b, vermieden werden kann. Ein von Material frei gelassener Raum zwischen dem Kunststofffenster 50b und dem Referenzsensor 38b bzw. dem dritten Sensor 42b bildet einen Luftabstand 56b in der Form eines Luftspalts zwischen dem Referenzsensor 38b bzw. dem dritten Sensor 42b und dem Kunststofffenster 50b, wobei der Referenzsensor 38b bzw. der dritte Sensor 42b durch den Luftabstand 56b von der Arbeitsfläche 14b und vom Werkstück 32b beabstandet ist. Vorzugsweise weist der Luftabstand 56b eine vertikale Erstreckung von ca. 20 mm auf.

Figur 4 zeigt einen Teilabschnitt der Arbeitsfläche 14b von oben (siehe Pfeile IV in Figur 3). Es ist der aus dem Material 46b ausgesparte Hohlraum 48b zu erkennen, der dem Referenzsensor 38b bzw. dem dritten Sensor 42b zugeordnet ist Zum Zweck der Beschreibung des Referenzsensors 38b bzw. des dritten Sensors 42b wurde auf die Darstellung des Kunststofffensters 50b verzichtet, wodurch der Referenzsensor 38b und der dritte Sensor 42b in einer Ansicht von oben zu sehen sind. Der Referenzsensor 38b weist eine koplanare Antenne 58b auf, die drei Streifenleiter-Elemente 60b aufweist, welche in einer Ebene 62b eines dielektrischen Trägers angeordnet sind. In dieser Konfiguration ist der dritte Sensor 42b als eine Freiraumantenne ausgebildet. In einer alternativen Konfiguration kann der Referenzsensor 38b als Freiraumantenne ausgebildet sein, wobei der dritte Sensor 42b eine koplanare Antenne aufweist.

In Figur 5 ist ein X-Y-Diagramm dargestellt, in welchem auf der X-Achse eine Frequenz f und auf der Y-Achse eine Signalintensität I aufgetragen sind. Es ist insbesondere ein Frequenzbereich 64 dargestellt, in welchem die vom Referenzsensor 38a (Figur 1) oder von dem Referenzsensor 38b bzw. dem dritten Sensor 42b (Figur 2) ausgebildete UWB-Sensoreinheit betrieben wird. Dieser Frequenzbereich 64 entspricht einem Intervall zwischen einer unteren Frequenz f₁ und einer oberen Frequenz f₂, in welchem die entsprechende UWB-Sensoreinheit auf diskrete Weise angeregt wird. Hierbei wird die UWB-Sensoreinheit zu sukzessiven Zeitpunkten tᵢ mit einer Mittelfrequenz f_{Mi} angeregt, wobei i ein Index ist, der Werte zwischen 1 und der Anzahl der diskreten Anregungsfrequenzen im Frequenzbereich 64 annimmt. Beispielhaft wird zum Zeitpunkt t₁ die UWB-Sensoreinheit bei einer Mittelfrequenz f_{M1} betrieben, während sie zu späteren Zeitpunkten t₂, t₃, t₄ usw. bei weiteren Mittelfrequenzen f_{M2}, f_{M3}, f_{M4} usw. betrieben wird, wie mittels gestrichelter Linien angedeutet wird. Die Mittelfrequenz, bei welcher die UWB-Sensoreinheit betrieben wird, wird sukzessive schrittweise um einen Betrag 66.1, 66.2, 66.3 usw. erhöht, wobei die Beträge 66.1, 66.2, 66.3 vorzugsweise unterschiedliche Werte annehmen. Der Frequenzbereich 64 kann periodisch oder aperiodisch abgetastet werden. In einem bevorzugten Ausführungsbeispiel entspricht der Frequenzbereich 64 dem Intervall zwischen f₁ = 2.7 GHz und f₂ = 7.5 GHz, wobei die Anzahl der diskreten Mittelfrequenzen f_{Mi} vorteilhafterweise über 50 liegt. Der Frequenzbereich 64 wird vorzugsweise in ca. 2.5 ms abgetastet.

## Patentansprüche

1. Überwachungsvorrichtung (28) einer Werkzeugmaschine (10), insbesondere einer Tischkreissäge, mit einer Motoreinheit (16), mit einer Auswerteeinheit (40) und mit einer Sicherheitseinheit (30) mit zumindest einem ersten Sensor (32) zur Erkennung einen Situation, die eine potentielle Gefährdung eines Bedieners (18) der Werkzeugmaschine (10) darstellt, **dadurch gekennzeichnet, dass** die Überwachungsvorrichtung (28) zumindest einen Referenzsensor (38) aufweist, der während einer Bearbeitung eines Werkstücks (20) mit der Werkzeugmaschine (10) eine charakterisierende physikalische Messgröße des Werkstücks (20) in eine elektrische Kenngröße umwandelt, die einen Referenzwert für ein Signal des ersten Sensors (32) festlegt, wobei die Auswerteeinheit (40) bei einer Auswertung des Signals des ersten Sensors (32) den Referenzwert als Korrektur berücksichtigt und die Sicherheitseinheit (30) im Fall einer Überschreitung eines im Voraus festgelegten und in der Sicherheitseinheit (30) hinterlegten Schwellwerts des ersten Sensors (32) ein Signal erzeugt, das die Motoreinheit (16) zum Schutz des Bedieners (18) abschaltet.

2. Überwachungsvorrichtung (28) nach Anspruch 1, **dadurch gekennzeichnet, dass** die durch den Referenzsensor (38) erfasste physikalische Messgröße im Wesentlichen von einem Feuchtegehalt des Werkstücks (20) bestimmt ist.

3. Überwachungsvorrichtung (28) nach Anspruch 1 oder 2, **gekennzeichnet durch** eine Lagereinheit (54), die den Referenzsensor (38) in einem Bereich (55) lagert, der, bezüglich einer vorgegebenen Vorschubrichtung (22), in welcher das Werkstück (20) während der Bearbeitung gegen ein Werkzeug (12) der Werkzeugmaschine (10) bewegt wird, vor dem Werkzeug (12) angeordnet ist.

4. Überwachungsvorrichtung (28) nach einem der vorhergehenden Ansprüche, **dadurch gekennzeichnet, dass** der Referenzsensor (38) als UWB-Sensoreinheit ausgebildet ist.

5. Überwachungsvorrichtung (28) nach Anspruch 4, **dadurch gekennzeichnet, dass** die UWB-Sensoreinheit bei einer Mittelfrequenz (f_{Mi}) betrieben wird, die in einem vorgegebenen Frequenzbereich (64) auf diskrete Weise variiert.

6. Überwachungsvorrichtung (28) nach Anspruch 4 oder 5, **dadurch gekennzeichnet, dass** die UWB-Sensoreinheit bei einer Mittelfrequenz (f_{Mi}) betrieben wird, die periodisch in einem vorgegebenen Frequenzbereich (64) variiert.

7. Überwachungsvorrichtung (28) nach einem der Ansprüche 4 bis 6, **gekennzeichnet durch** zumindest einen dritten, als UWB-Sensoreinheit ausgebildeten Sensor (42b), der bei einer Mittelfrequenz betrieben wird, die einen Abstand von mindestens 500 MHz zu einer Mittelfrequenz des Referenzsensors (38) aufweist.

8. Überwachungsvorrichtung (28) nach Anspruch 7, **dadurch gekennzeichnet, dass** von dem als UWB-Sensoreinheit ausgebildeten Referenzsensor (38b) und dem als UWB-Sensoreinheit ausgebildeten dritten Sensor (42b) zumindest ein Sensor eine koplanare Antenne (58b) aufweist.

9. Überwachungsvorrichtung (28) nach einem der vorhergehenden Ansprüche, **dadurch gekennzeichnet dass** der Referenzsensor (38) durch die Lagereinheit (54) tiefer als eine zum Auflegen des Werkstücks (20) vorgesehene Arbeitsfläche (14) der Werkzeugmaschine (10) gelagert ist.

10. Überwachungsvorrichtung (28) nach Anspruch 9, **dadurch gekennzeichnet, dass** der Referenzsensor (38) mittels der Lagereinheit (54) durch einen Luftabstand (56) von der Arbeitsfläche (14) beabstandet ist.

11. Überwachungvorrichtung (28) nach einem der vorhergehenden Ansprüche, **dadurch gekennzeichnet, dass** der erste Sensor (28) als ein kapazitiver Sensor ausgebildet ist.

12. Überwachungsvorrichtung (28) nach einem der Ansprüche 10 oder 11, **gekennzeichnet durch** eine Anzeigeeinheit (26), die eine von der Auswerteeinheit (40) aufgrund eines Signals des Referenzsensors (38) erzeugte Kenngröße anzeigt, um einen Bediener (18) über eine Höhe der charakterisierenden physikalischen Messgröße des Werkstücks (20) **durch** eine optische und/oder akustische Darstellung zu informieren.

13. Überwachungsvorrichtung (28) nach einem der vorhergehenden Ansprüche, **dadurch gekennzeichnet, dass** die Sicherheitseinheit (30) bei Überschreitung eines im Voraus festgelegten Werts der elektrischen Kenngröße des Referenzsensors (38) eine bedienerseitige Quittierung zur Fortführung eines Betriebs der Werkzeugmaschine (10) anfordert.

## Claims

1. Monitoring apparatus (28) for a machine tool (10), particularly for a circular table saw, having a motor unit (16), having an evaluation unit (40) and having a safety unit (30) having at least one first sensor (32) for identifying a situation that presents a potential hazard for an operator (18) of the machine tool (10),
**characterized in that**
the monitoring apparatus (28) has at least one reference sensor (38) which, during machining of a workpiece (20) using the machine tool (10), converts a characterizing physical measured variable from the workpiece (20) into an electrical parameter which stipulates a reference value for a signal from the first sensor (32), wherein the evaluation unit (40), when evaluating the signal from the first sensor (32), takes account of the reference value as correction, and the safety unit (30) produces a signal that shuts down the motor unit (16) to protect the operator (18) in the event of a previously stipulated threshold value, stored in the safety unit (30), for the first sensor (32) being exceeded.

2. Monitoring apparatus (28) according to Claim 1,
**characterized in that**
the physical measured variable which is sensed by the reference sensor (38) is determined essentially by a moisture content of the workpiece (20).

3. Monitoring apparatus (28) according to Claim 1 or 2,
**characterized by**
a bearing unit (54) which supports the reference sensor (38) in a region (55) which is arranged in front of the tool (12) in relation to a prescribed direction of advance (22) in which the workpiece (20) is moved against a tool (12) in the machine tool (10) during machining.

4. Monitoring apparatus (28) according to one of the preceding claims,
**characterized in that**
the reference sensor (38) is in the form of a UWB sensor unit.

5. Monitoring apparatus (28) according to Claim 4,
**characterized in that**
the UWB sensor unit is operated at a center frequency (f_{Mi}) which varies discretely in a prescribed frequency range (64).

6. Monitoring apparatus (28) according to Claim 4 or 5,
**characterized in that**
the UWB sensor unit is operated at a center frequency (f_{Mi}) which varies periodically in a prescribed frequency range (64).

7. Monitoring apparatus (28) according to one of Claims 4 to 6,
**characterized by**
at least one third sensor (42b), in the form of the UWB sensor unit, which is operated at a center frequency which is at an interval of at least 500 MHz from a center frequency for the reference sensor (38).

8. Monitoring apparatus (28) according to Claim 7,
**characterized in that**,
of the reference sensor (38b) in the form of a UWB sensor unit and the third sensor (42b) in the form of a UWB sensor unit, at least one sensor has a coplanar antenna (58b).

9. Monitoring apparatus (28) according to one of the preceding claims,
**characterized in that**
the reference sensor (38) is supported by the bearing unit (54) at a greater depth than a working surface (14) of the machine tool (10) which is provided for the purpose of laying the workpiece (20).

10. Monitoring apparatus (28) according to Claim 9,
**characterized in that**
the reference sensor (38) is spaced apart from the working surface (14) by an air interval (56) by means of the bearing unit (54).

11. Monitoring apparatus (28) according to one of the preceding claims,
**characterized in that**
the first sensor (28) is in the form of a capacitive sensor.

12. Monitoring apparatus (28) according to either of Claims 10 and 11,
**characterized by**
a display unit (26) which displays a parameter produced by the evaluation unit (40) on the basis of a signal from the reference sensor (38) in order to inform an operator (18) about a level of the characterizing physical measured variable from the workpiece (20) by means of a visual and/or audible presentation.

13. Monitoring apparatus (28) according to one of the preceding claims,
**characterized in that**
the safety unit (30) requests an acknowledgment by the operator to continue operation of the machine tool (10) in the event of a value which has been stipulated in advance for the electrical parameter from the reference sensor (38) being exceeded.

## Revendications

1. Dispositif de surveillance (28) d'une machine-outil (10), notamment d'une scie circulaire de table comportant une unité à moteur (16), une unité d'évaluation (40) et une unité de sécurité (30) munie d'au moins un premier capteur (32) destiné à détecter une situation qui constitue une mise en danger potentielle d'un utilisateur (18) de la machine-outil (10), **caractérisé en ce que** le dispositif de surveillance (28) comporte au moins un capteur de référence (38) qui convertit une grandeur de mesure physique caractérisant la pièce à usiner (20) en une grandeur électrique pendant un traitement d'une pièce à usiner (20) à l'aide de la machine-outil (10), laquelle grandeur établit une valeur de référence pour un signal du premier capteur (32), dans lequel l'unité d'évaluation (40) utilise, lors d'une évaluation du signal du premier capteur (32), la valeur de référence en tant que correction et l'unité de sécurité (30), dans le cas où un seuil du premier capteur (32) établi à l'avance et stocké dans l'unité de sécurité (30) est dépassé, génère un signal qui désactive l'unité à moteur (16) afin de protéger l'utilisateur (18).

2. Dispositif de surveillance (28) selon la revendication 1, **caractérisé en ce que** la grandeur de mesure physique détectée par le capteur de référence (38) est essentiellement déterminée par une teneur en humidité de la pièce à usiner (20).

3. Dispositif de surveillance (28) selon la revendication 1 ou 2, **caractérisé par** une unité de support (54) qui supporte le capteur de référence (38) dans une région (55) qui est disposée à l'avant de l'outil (12) par rapport à une direction de déplacement prédéterminée (22) dans laquelle la pièce à usiner (20) est déplacée pendant le traitement vers un outil (12) de la machine-outil (10).

4. Dispositif de surveillance (28) selon l'une quelconque des revendications précédentes, **caractérisé en ce que** le capteur de référence (38) est réalisé sous la forme d'une unité à capteur UWB.

5. Dispositif de surveillance (28) selon la revendication 4, **caractérisé en ce que** l'unité à capteur UWB est mise en fonctionnement à une fréquence moyenne (f_{Mi}) qui varie de manière discrète dans un domaine de fréquence prédéterminé (64).

6. Dispositif de surveillance (28) selon la revendication 4 ou 5, **caractérisé en ce que** l'unité à capteur UWB est mise en fonctionnement à une fréquence moyenne (f_{Mi}) qui varie de manière périodique dans un domaine de fréquence prédéterminé (64).

7. Dispositif de surveillance (28) selon l'une quelconque des revendications 4 à 6, **caractérisé par** au moins un troisième capteur (42b) réalisé sous la forme d'une unité à capteur UWB mise en fonctionnement à une fréquence moyenne qui est espacée d'au moins 500 MHz d'une fréquence moyenne du capteur de référence (38).

8. Dispositif de surveillance (28) selon la revendication 7, **caractérisé en ce que**, parmi le capteur de référence (38b) réalisé sous la forme d'une unité à capteur UWB et le troisième capteur (42b) réalisé sous la forme d'une unité à capteur UWB, un capteur comporte une antenne coplanaire (58b).

9. Dispositif de surveillance (28) selon l'une quelconque des revendications précédentes, **caractérisé en ce que** le capteur de référence (38) est supporté par l'unité de support (54) plus bas qu'une surface de travail (14) de la machine-outil (10), prévue pour placer la pièce à usiner (20).

10. Dispositif de surveillance (28) selon la revendication 9, **caractérisé en ce que** le capteur de référence (38) est espacé par un interstice d'air (56) de la surface de travail (14) au moyen de l'unité de support (54).

11. Dispositif de surveillance (28) selon l'une quelconque des revendications précédentes, **caractérisé en ce que** le premier capteur (28) est réalisé sous la forme d'un capteur capacitif.

12. Dispositif de surveillance (28) selon l'une quelconque des revendications 10 ou 11,
**caractérisé par** une unité d'affichage (26) qui affiche une grandeur générée par l'unité d'évaluation (40) sur la base d'un signal du capteur de référence (38) afin d'informer un utilisateur (18) d'une valeur d'une grandeur de mesure physique caractérisant la pièce usinée (20) par une représentation optique et/ou acoustique.

13. Dispositif de surveillance (28) selon l'une quelconque des revendications précédentes, **caractérisé en ce que** l'unité de sécurité (30) demande, lors d'un dépassement d'une valeur établie à l'avance de la grandeur électrique du capteur de référence (38), un acquittement par l'utilisateur pour la poursuite d'un fonctionnement de la machine-outil (10).
